(19) Europäisches Patentamt
European Patent Office
Office européen des brevets

(11) **EP 3 021 471 A1**

(12) **EUROPEAN PATENT APPLICATION**

(43) Date of publication:
**18.05.2016 Bulletin 2016/20**

(51) Int Cl.:
*H02M 1/00* (2006.01)          *H02M 3/156* (2006.01)
*H02J 3/38* (2006.01)          *H02M 7/487* (2007.01)
*H02J 7/35* (2006.01)

(21) Application number: **14193137.8**

(22) Date of filing: **14.11.2014**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **ABB Oy**
**00380 Helsinki (FI)**

(72) Inventors:
• **Alahuhtala, Jarno**
**00380 Helsinki (FI)**

• **Jussila, Matti T.**
**00380 Helsinki (FI)**
• **Karppanen, Matti**
**00380 Helsinki (FI)**

(74) Representative: **Kolster Oy Ab**
**Iso Roobertinkatu 23**
**PO Box 148**
**00121 Helsinki (FI)**

(54) **Converter assembly**

(57)      A converter assembly comprising a first controllable switch (S1), a second controllable switch (S2), a third controllable switch (S3) and a control system (CTRL). The first controllable switch (S1) and the second controllable switch (S2) are connected in series and the third controllable switch (S3) is connected between a first terminal of the first controllable switch (S1) and a second terminal of the second controllable switch (S2). The control system (CTRL) is adapted to control the third controllable switch (S3) into a conducting mode while the first controllable switch (S1) and the second controllable switch (S2) are in a conducting mode.

Fig. 2

**Description**

FIELD OF THE INVENTION

The present invention relates to a converter assembly.

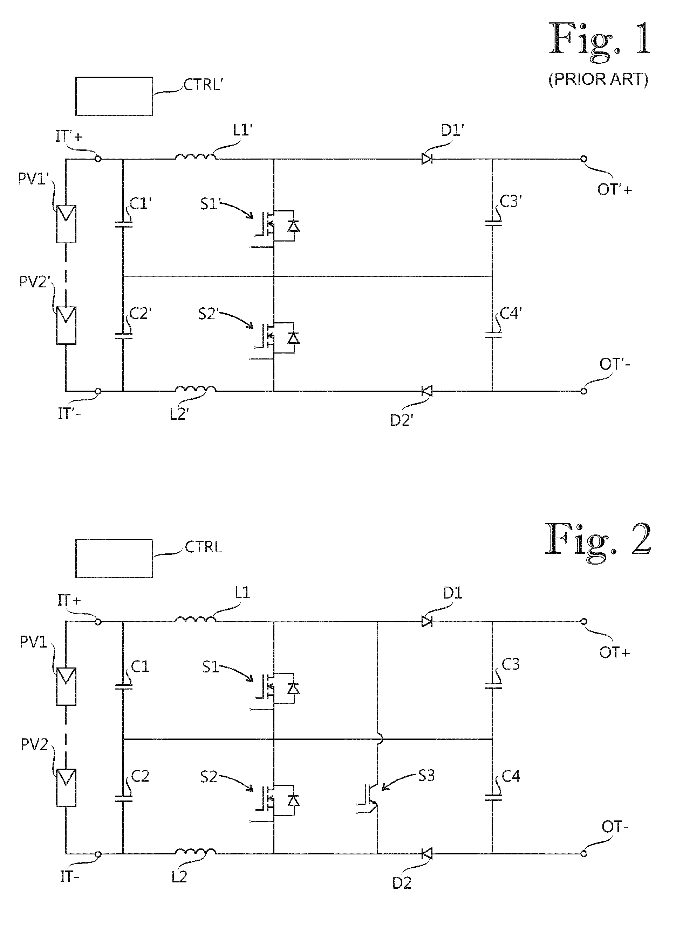

A stacked boost converter is known in the art. Figure 1 shows a solar power plant with a prior art stacked boost converter. The stacked boost converter of Figure 1 has four operational states which allow the output voltage to be adjusted to a certain desired level.

One of the disadvantages associated with the prior art stacked boost converter is high conduction losses caused by the fact that there are always two semiconductors in the current. Reducing conduction losses of a first controllable switch S1' and a second controllable switch S2' by means of switch design is difficult since correct die size selection is a compromise between switching losses and conduction losses limited by a given junction temperature. Small die size provides faster switching speed and lower costs. Large die size provides small conduction losses but induces slower switching speed and higher costs.

BRIEF DESCRIPTION OF THE INVENTION

An object of the present invention is to reduce conversion losses of a stacked boost converter. The objects of the invention are achieved by a converter assembly which is characterized by what is stated in independent claim 1. The preferred embodiments of the invention are disclosed in the dependent claims.

The invention is based on the idea of adding a third controllable switch into the topology, the third controllable switch being adapted to bypass the first controllable switch and the second controllable switch. It is possible to transfer majority of current from the first controllable switch and second controllable switch to the third controllable switch when both the first controllable switch and the second controllable switch are in a conducting state. The third controllable switch doesn't operate during an actual switching event. Instead, the third controllable switch is switched on and off with close to zero voltage when both the first controllable switch and the second controllable switch are already conducting. This allows optimizing the third controllable switch for low conduction losses. Further, the first controllable switch and the second controllable switch can be optimized solely for switching performance. One additional advantage, besides lower overall losses, is better loss distribution between the controllable switches, which facilitates cooling of the controllable switches.

BRIEF DESCRIPTION OF THE DRAWINGS

In the following the invention will be described in greater detail by means of preferred embodiments with reference to the attached drawings, in which

Figure 1 shows a solar power plant with a prior art stacked boost converter;
Figure 2 shows a solar power plant with a converter assembly according to an embodiment of the present invention; and
Figure 3 illustrates an operating cycle of the converter assembly of Figure 2.

DETAILED DESCRIPTION OF THE INVENTION

Figure 2 shows a solar power plant comprising photovoltaic means and a converter assembly according to an embodiment of the present invention. The photovoltaic means comprises a plurality of series connected photovoltaic cells including photovoltaic cells PV1 and PV2. The converter assembly comprises a first controllable switch S1, a second controllable switch S2, a third controllable switch S3, a control system CTRL, a first diode D1, a second diode D2, a first inductor L1, a second inductor L2, a first capacitor C1, a second capacitor C2, a third capacitor C3 and a fourth capacitor C4. The converter assembly has a positive input terminal IT+, a negative input terminal IT-, a positive output terminal OT+, and a negative output terminal OT-.

Each of the first controllable switch S1, second controllable switch S2 and third controllable switch S3 has a first terminal and a second terminal. The first terminal of the second controllable switch S2 is conductively connected to the second terminal of the first controllable switch S1. The first terminal of the third controllable switch S3 is conductively connected to the first terminal of the first controllable switch S1, and the second terminal of the third controllable switch S3 is conductively connected to the second terminal of the second controllable switch S2. Herein a conductive connection between two terminals means that during operation of the converter assembly said two terminals are substantially in the same electric potential.

A positive terminal of the photovoltaic cell PV1 is conductively connected to a first terminal of the first inductor L1 and a positive terminal of the first capacitor C1. A negative terminal of the first capacitor C1 is conductively connected to a positive terminal of the second capacitor C2, the second terminal of the first controllable switch S1, the first terminal of the second controllable switch S2, a negative terminal of the third capacitor C3 and a positive terminal of the fourth capacitor C4. The first terminal of the first controllable switch S1 is conductively connected to a second terminal of the first inductor L1, an anode of the first diode D1 and the first terminal of the third controllable switch S3. A cathode of the first diode D1 is conductively connected to a positive terminal of the third capacitor C3 and the positive output terminal OT+.

A negative terminal of the photovoltaic cell PV2 is conductively connected to a negative terminal of the second capacitor C2 and a first terminal of the second inductor L2. The second terminal of the second controllable switch S2 is conductively connected to a second terminal of the second inductor L2, a cathode of the second diode D2 and the second terminal of the third controllable switch S3. A negative terminal of the fourth capacitor C4 is conductively connected to an anode of the second diode D2 and the negative output terminal OT-. Herein a conductive connection between two points in the converter assembly means that the points in question are substantially in the same electric potential during all operational states of the converter assembly.

In an embodiment the photovoltaic means comprises exactly two photovoltaic cells wherein the photovoltaic cells PV1 and PV2 are connected in series such that a negative terminal of the photovoltaic cell PV1 is conductively connected to a positive terminal of the photovoltaic cell PV2. A broken line between the photovoltaic cells PV1 and PV2 represents alternative embodiments in which there is one or more series connected photovoltaic cells between the photovoltaic cells PV1 and PV2.

The control system CTRL is adapted to control modes of the first controllable switch S1, second controllable switch S2 and third controllable switch S3. The control system CTRL is adapted to control each of the first controllable switch S1, second controllable switch S2 and third controllable switch S3 selectively into a conducting mode and a non-conducting mode by means of corresponding control signals.

The control system CTRL is adapted to provide a first operational state for the converter assembly in which both the first controllable switch S1 and the second controllable switch S2 are in a conducting mode while the third controllable switch S3 is in a non-conducting mode. The control system CTRL is further adapted to provide a second operational state for the converter assembly in which each of the first controllable switch S1, the second controllable switch S2 and the third controllable switch S3 are in a conducting mode. The control system CTRL is adapted to transfer the converter assembly from the first operational state to the second operational state by controlling the third controllable switch S3 into a conducting mode while the first controllable switch S1 and the second controllable switch S2 are in a conducting mode.

The first operational state is adapted as an intermediate state. The control system CTRL is adapted to transfer the converter assembly from the first operational state to the second operational state when a voltage across the third controllable switch S3 is substantially equal to a sum of voltage drops of the first controllable switch S1 and the second controllable switch S2 during a conducting state. The voltage drop of a controllable switch during conducting state ranges from less than a volt to more than one and a half volts, depending on the type of the controllable switch and operating conditions. This means that when the third controllable switch S3 is transferred from non-conducting state to conducting state, a voltage across the third controllable switch S3 is low, perhaps two or three volts, instead of the much higher voltage present between the positive input terminal IT+ and the negative input terminal IT-. The control system CTRL is adapted to transfer the converter assembly from the first operational state to the second operational state with a minimum delay. The control system CTRL is adapted to minimize the time the converter assembly is in the first operational state.

In the first operational state an electric current flows through the first controllable switch S1 and the second controllable switch S2. The current flows through the first controllable switch S1 from the first terminal of the first controllable switch S1 to the second terminal of the first controllable switch S1, and through the second controllable switch S2 from the first terminal of the second controllable switch S2 to the second terminal of the second controllable switch S2. In the first operational state there is no current through the third controllable switch S3.

In the second operational state an electric current flows through the third controllable switch S3. The current flows through the third controllable switch S3 from the first terminal of the third controllable switch S3 to the second terminal of the third controllable switch S3. There is also an electric current through the first controllable switch S1 and the second controllable switch S2. In an embodiment the first controllable switch, second controllable switch and third controllable switch are selected such that in the second operational state a current flowing through the third controllable switch is substantially higher than a current flowing through the first controllable switch or the second controllable switch.

In addition to the first operational state and the second operational state the converter assembly has a third operational state, fourth operational state and fifth operational state. In the third operational state of the converter assembly the first controllable switch S1, the second controllable switch S2 and the third controllable switch S3 are in a non-conducting mode. In the fourth operational state of the converter assembly the first controllable switch S1 is in a conducting mode while the second controllable switch S2 and the third controllable switch S3 are in a non-conducting mode. In the fifth operational state of the converter assembly the second controllable switch S2 is in a conducting mode while the first controllable switch S1 and the third controllable switch S3 are in a non-conducting mode.

The modes of the controllable switches S1, S2 and S3 in different operational states of the converter assembly are disclosed in Table 1. Abbreviation OP refers to an operational state, and a following number refers to the ordinal number of operational state. For example, OP3 refers to a third operational state.

Table 1. Modes of the controllable switches S1, S2 and S3 in different operational states.

|  | S1 | S2 | S3 |
|---|---|---|---|
| OP1 | ON | ON | OFF |
| OP2 | ON | ON | ON |
| OP3 | OFF | OFF | OFF |
| OP4 | ON | OFF | OFF |
| OP5 | OFF | ON | OFF |

The control system CTRL is adapted to transfer the converter assembly into and out of the second operational state through the first operational state. This means that an operational state preceding the second operational state is always the first operational state, and that an operational state following the second operational state is always the first operational state.

Both the first controllable switch S1 and the second controllable switch S2 are metal-oxide-semiconductor field-effect transistors or MOSFETs. The first controllable switch S1 is identical with the second controllable switch S2. The third controllable switch S3 is an insulated-gate bipolar transistor or an IGBT.

In an alternative embodiment any one of the first controllable switch, second controllable switch and third controllable switch may be BJT, MOSFET, IGBT or JFET, or a different type of semiconductor switch. In theory the first controllable switch, the second controllable switch and the third controllable switch do not have to be even semiconductor switches.

The third controllable switch S3 has a lower conduction loss value than the first controllable switch S1. Since the first controllable switch S1 is identical with the second controllable switch S2, the third controllable switch S3 also has a lower conduction loss value than the second controllable switch S2. The total losses of the converter assembly are lower in the second operational state than in the first operational state. In an embodiment said lower conduction loss value of the third controllable switch is realized by designing a die size of the third controllable switch substantially larger than a die size of either one of the first controllable switch and the second controllable switch.

In an alternative embodiment, the conduction loss values of the first controllable switch, second controllable switch and third controllable switch are substantially equal. In this alternative embodiment, the total losses of the converter assembly are lower in the second operational state than in the first operational state since in the second operational state majority of current passes through the third controllable switch instead of the series connected first controllable switch and second controllable switch. It is even possible to choose the third controllable switch such that it has a higher conduction loss value than the first controllable switch and the second controllable switch as long as the total losses of the converter assembly are lower in the second operational state than in the first operational state.

The first controllable switch S1 has a duty cycle $D_{S1}$ and the second controllable switch S2 has a duty cycle $D_{S2}$. An average $D_{S12}$ of the duty cycles $D_{S1}$ and $D_{S2}$ is obtainable from equation

$$D_{S12} = 1 - \frac{u_{C1} + u_{C2}}{u_{C3} + u_{C4}},$$

wherein $u_{C1}$ is the voltage of the first capacitor C1, $u_{C2}$ is the voltage of the second capacitor C2, $u_{C3}$ is the voltage of the third capacitor C3, and $u_{C4}$ is the voltage of the fourth capacitor C4. When a Neutral Point Clamped inverter, or an NPC inverter, is connected to the positive output terminal OT+ and the negative output terminal OT-, the NPC inverter DC link voltage balancing will take care of the voltage balance between the third capacitor C3 and the fourth capacitor C4.

The voltages of each of the first capacitor C1 and the second capacitor C2 need to be adjusted to half of the total input voltage present between the positive input terminal IT+ and the negative input terminal IT-. This can be realized by providing a small offset $\delta D$ that is added to the $D_{S1}$ and subtracted from $D_{S2}$. If a voltage over the first capacitor C1 is greater than a voltage over the second capacitor C2 ($u_{C1} > u_{C2}$), then $\delta D$ gets a positive value and the duty cycle $D_{S1}$ of the first controllable switch S1 will be greater than the duty cycle $D_{S2}$ of second controllable switch S2. Considering an opposite voltage balance in the input, the change in the duty cycles of the first controllable switch S1 and the second controllable switch S2 would be vice versa.

When the voltage $u_{C1}$ of the first capacitor C1 is higher than the voltage $u_{C2}$ of the second capacitor C2 ($u_{C1}$ > $u_{C2}$), the operating cycle is

$$OP3 - OP4 - OP1 - OP2 - OP1 - OP4 - OP3.$$

Similarly, when the voltage $u_{C1}$ of the first capacitor C1 is lower than the voltage $u_{C2}$ of the second capacitor C2 ($u_{C1}$ < $u_{C2}$), the operating cycle is

$$OP3 - OP5 - OP1 - OP2 - OP1 - OP5 - OP3.$$

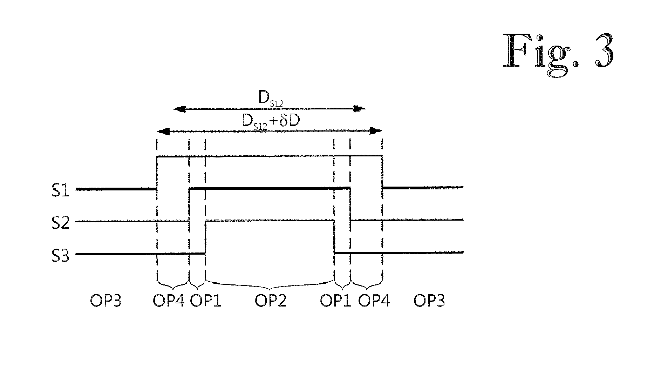

The first-mentioned operating cycle is illustrated in Figure 3, with the corresponding switch control signals and resulting states. The δD length in Figure 3 is exaggerated for the sake of clarity. A further notice to make is that when input voltage balance is achieved, the fourth operational state OP4 is omitted from the cycle. This does not affect switching losses of the converter but further reduces the conduction losses that the first controllable switch S1 would experience in the operating cycle and enables transferring to the second operational state OP2 even sooner. This is the case in the steady state operation.

The solar power plant of Figure 2 is similar to the prior art solar power plant of Figure 1, except for the third controllable switch S3 which does not exist in the prior art converter assembly. Reference signs used in Figures 1 and 2 correspond to each other such that each reference sign in Figure 1 has an additional apostrophe in order to distinguish components of the prior art assembly from components present in the converter assembly according to the invention. The four operational states of the prior art stacked boost converter of Figure 1 correspond to the operational states OP1, OP3, OP4 and OP5 of the converter assembly of Figure 2.

The converter assembly of Figure 2 doesn't require any excess control or gate powering effort when compared to the prior art stacked boost converter of Figure 1. The emitter of the third controllable switch S3 is in the same potential with the source of the second controllable switch S2 and therefore the gate of the third controllable switch S3 can be driven using the existing powering for the second controllable switch S2. The second controllable switch S2 and the third controllable switch S3 are never controlled on or off simultaneously so gate powering does not need to be rated for this.

In an embodiment, the third controllable switch is controlled using passive logic or delay circuit, so control signals for the first controllable switch and the second controllable switch are sufficient for controlling the converter assembly. In such an embodiment the first controllable switch and the second controllable switch are controlled into conducting state as a response to a corresponding control signal received by a logic controller. When the logic controller receives a control signal instructing to switch off the first controllable switch or the second controllable switch, the corresponding switch is turned off after a short delay corresponding to a commutation time of the third controllable switch. When the logic controller receives control signals instructing to switch on both the first controllable switch and the second controllable switch, the third controllable switch is controlled into conducting state after a delay corresponding to a switching-on delay of the first controllable switch and the second controllable switch. When the logic controller receives a control signal instructing to switch off either the first controllable switch or the second controllable switch, the third controllable switch is controlled into non-conducting state without a delay.

The photovoltaic means of the solar power plant of Figure 2 is a direct-current supply. The converter assembly of Figure 2 is adapted to be connected to a direct-current supply via the positive input terminal IT+ and the negative input terminal IT-.

In an embodiment, the converter assembly is designed such that a maximum voltage between the positive input terminal IT+ and the negative input terminal IT- is 1000 V. In this embodiment the rated voltage of the first controllable switch and second controllable switch may be in the range of 600 to 900 V, and the rated voltage of the third controllable switch may be 1200 V. In an alternative embodiment, the converter assembly may be designed such that a maximum voltage between the positive input terminal and the negative input terminal is in the range of 800 to 1500 V. However, the converter assembly according to the present invention is practicable for any voltage range such that the only limiting factor is the maximum voltage of the controllable switches.

It will be obvious to a person skilled in the art that the inventive concept can be implemented in various ways. The invention and its embodiments are not limited to the examples described above but may vary within the scope of the claims.

**Claims**

1. A converter assembly comprising:

   a first controllable switch (S1) having a first terminal and a second terminal;
   a second controllable switch (S2) having a first terminal and a second terminal, the first terminal of the second controllable switch (S2) being conductively connected to the second terminal of the first controllable switch (S1); and
   a control system (CTRL) adapted to control modes of the first controllable switch (S1) and the second controllable switch (S2), the control system (CTRL) being adapted to provide a first operational state for the converter assembly in which both the first controllable switch (S1) and the second controllable switch (S2) are in a conducting mode,
   **characterized in that** the converter assembly comprises a third controllable switch (S3) having a first terminal and a second terminal, the first terminal of the third controllable switch (S3) being conductively connected to the first terminal of the first controllable switch (S1), and the second terminal of the third controllable switch (S3) being conductively connected to the second terminal of the second controllable switch (S2),
   the control system (CTRL) being adapted to provide a second operational state for the converter assembly in which each of the first controllable switch (S1), the second controllable switch (S2) and the third controllable switch (S3) are in a conducting mode, the control system (CTRL) being adapted to transfer the converter assembly from the first operational state to the second operational state by controlling the third controllable switch (S3) into a conducting mode while the first controllable switch (S1) and the second controllable switch (S2) are in a conducting mode.

2. A converter assembly according to claim 1, **characterized in that** the conduction loss value of the third controllable switch (S3) is lower than or equal to the conduction loss value of the first controllable switch (S1), and the conduction loss value of the third controllable switch (S3) is lower than or equal to the conduction loss value of the second controllable switch (S2).

3. A converter assembly according to claim 1 or 2, **characterized in that** the first controllable switch (S1) is identical with the second controllable switch (S2).

4. A converter assembly as claimed in any one of the preceding claims, **characterized in that** the control system (CTRL) is adapted to transfer the converter assembly from the first operational state to the second operational state when a voltage across the third controllable switch (S3) is substantially equal to a sum of the voltage drops of the first controllable switch (S1) and the second controllable switch (S2).

5. A converter assembly as claimed in any one of the preceding claims, **characterized in that** the first operational state is adapted as an intermediate state and the control system (CTRL) is adapted to minimize the time the converter assembly is in the first operational state.

6. A converter assembly as claimed in any one of the preceding claims, **characterized in that** the control system (CTRL) is adapted to transfer the converter assembly from the second operational state to the first operational state by controlling the third controllable switch (S3) into a non-conducting mode while the first controllable switch (S1) and the second controllable switch (S2) are in a conducting mode.

7. A converter assembly as claimed in any one of the preceding claims, **characterized in that** the control system (CTRL) is adapted to provide at least one further operational state for the converter assembly in which at least one of the first controllable switch (S1) and the second controllable switch (S2) is in a non-conducting mode.

8. A converter assembly according to claim 7, **characterized in that** the control system (CTRL) is adapted to transfer the converter assembly from the first operational state to a further operational state by controlling at least one of the first controllable switch (S1) and the second controllable switch (S2) into a non-conducting mode.

Fig. 1
(PRIOR ART)

Fig. 2

Fig. 3

Europäisches
Patentamt

European
Patent Office

Office européen
des brevets

# EUROPEAN SEARCH REPORT

Application Number

EP 14 19 3137

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 728 734 A1 (ABB OY [FI]) 7 May 2014 (2014-05-07) | 1-8 | INV. H02M1/00 |
| Y | * abstract; figure 3 * * paragraphs [0032] - [0038] * | 1-8 | H02M3/156 H02J3/38 H02M7/487 |
| Y | EP 2 001 111 A2 (MITSUBISHI ELECTRIC CORP [JP]) 10 December 2008 (2008-12-10) * abstract; figures 1-7 * * paragraphs [0013] - [0019], [0050] - [0053] * | 1-8 | H02J7/35 |
| Y | DE 20 2011 102068 U1 (VOLTWERK ELECTRONICS GMBH [DE]) 10 September 2012 (2012-09-10) * abstract; figure 4 * * paragraphs [0027], [0046] - [0047] * | 1-8 | |
| A | BRUNO BURGER ET AL: "Extreme high efficiency PV-power converters", 13TH EUROPEAN CONFERENCE ON POWER ELECTRONICS AND APPLICATIONS, 2009 : EPE '09 ; 8 - 10 SEPT. 2009, BARCELONA, SPAIN, IEEE, PISCATAWAY, NJ, USA, 8 September 2009 (2009-09-08), pages 1-13, XP031541616, ISBN: 978-1-4244-4432-8 * abstract; figure 15 * | 1-8 | |
| | | | TECHNICAL FIELDS SEARCHED (IPC) |
| | | | H02M H02J |
| A | EP 2 624 433 A1 (ABB RESEARCH LTD [CH]) 7 August 2013 (2013-08-07) * abstract; figure 3 * | 1-8 | |
| A | US 2013/301314 A1 (FU DIANBO [US] ET AL) 14 November 2013 (2013-11-14) * abstract; figure 13 * * paragraphs [0081], [0098] * | 1-8 | |
| A | EP 2 410 648 A1 (VINCOTECH HOLDINGS S A R L [LU]) 25 January 2012 (2012-01-25) * abstract; figure 11 * | 1-8 | |

The present search report has been drawn up for all claims

| Place of search | Date of completion of the search | Examiner |
|---|---|---|
| The Hague | 24 March 2015 | Van der Meer, Paul |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                                   
& : member of the same patent family, corresponding document

EPO FORM 1503 03.82 (P04C01)

**ANNEX TO THE EUROPEAN SEARCH REPORT
ON EUROPEAN PATENT APPLICATION NO.** EP 14 19 3137

This annex lists the patent family members relating to the patent documents cited in the above-mentioned European search report.
The members are as contained in the European Patent Office EDP file on
The European Patent Office is in no way liable for these particulars which are merely given for the purpose of information.

24-03-2015

| Patent document cited in search report | | Publication date | Patent family member(s) | | Publication date |
|---|---|---|---|---|---|
| EP 2728734 | A1 | 07-05-2014 | NONE | | |
| EP 2001111 | A2 | 10-12-2008 | EP | 2001111 A2 | 10-12-2008 |
| | | | JP | 4745234 B2 | 10-08-2011 |
| | | | US | 2009085537 A1 | 02-04-2009 |
| | | | WO | 2007110954 A1 | 04-10-2007 |
| DE 202011102068 | U1 | 10-09-2012 | CN | 103748758 A | 23-04-2014 |
| | | | DE | 112012002386 A5 | 27-03-2014 |
| | | | DE | 202011102068 U1 | 10-09-2012 |
| | | | EP | 2719051 A2 | 16-04-2014 |
| | | | JP | 2014516242 A | 07-07-2014 |
| | | | WO | 2012168338 A2 | 13-12-2012 |
| EP 2624433 | A1 | 07-08-2013 | CN | 103248209 A | 14-08-2013 |
| | | | EP | 2624433 A1 | 07-08-2013 |
| | | | US | 2013200715 A1 | 08-08-2013 |
| US 2013301314 | A1 | 14-11-2013 | US | 2013301314 A1 | 14-11-2013 |
| | | | WO | 2013166870 A1 | 14-11-2013 |
| EP 2410648 | A1 | 25-01-2012 | CN | 102340242 A | 01-02-2012 |
| | | | EP | 2410648 A1 | 25-01-2012 |
| | | | US | 2012019230 A1 | 26-01-2012 |

EPO FORM P0459

For more details about this annex : see Official Journal of the European Patent Office, No. 12/82